(19) Europäisches Patentamt
European Patent Office
Office européen des brevets

(11) **EP 4 414 736 A1**

(12) **EUROPEAN PATENT APPLICATION**

(43) Date of publication:
**14.08.2024 Bulletin 2024/33**

(51) International Patent Classification (IPC):
*G01S 5/00* (2006.01)   *G01S 13/84* (2006.01)

(21) Application number: **23212969.2**

(52) Cooperative Patent Classification (CPC):
**G01S 5/0018; G01S 5/0036; G01S 5/0072; G01S 5/0081; G01S 5/0244; G01S 13/84**

(22) Date of filing: **29.11.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.02.2023 FI 20235120**

(71) Applicant: **Nokia Technologies Oy**
**02610 Espoo (FI)**

(72) Inventors:
• **KEATING, Ryan**
  **Chicago, IL (US)**
• **CHA, Hyun-Su**
  **Chicago, IL (US)**
• **JOSHI, Satya Krishna**
  **Oulu (FI)**
• **KUMAR, Dileep**
  **Espoo (FI)**

(74) Representative: **Nokia EPO representatives**
**Nokia Technologies Oy**
**Karakaari 7**
**02610 Espoo (FI)**

(54) **REPORTING LOCAL OSCILLATOR INFORMATION FOR ROUND TRIP TIME CARRIER PHASE POSITIONING**

(57)     Systems, methods, apparatuses, and computer program products for reporting LO information for RTT carrier phase positioning. An apparatus includes at least one processor and at least one memory storing instructions that, when executed by the at least one processor, may cause the apparatus at least to determine a local oscillator in the apparatus that is used to perform at least one downlink positioning reference signal (PRS) measurement and at least one uplink sounding reference signal (SRS) transmission; and transmit local oscillator information comprising at least one identifier associated with the determined local oscillator to a first network entity.

FIG. 1

**Description**

**TECHNICAL FIELD:**

Some example embodiments may generally relate to mobile or wireless telecommunication systems, such as 3rd Generation Partnership Project (3GPP) Long Term Evolution (LTE), 5th generation (5G) radio access technology (RAT), new radio (NR) access technology, 6th generation (6G), and/or other communications systems. For example, certain example embodiments may relate to systems and/or methods for reporting local oscillator (LO) information for round trip time (RTT) carrier phase positioning.

**BACKGROUND:**

Examples of mobile or wireless telecommunication systems may include radio frequency (RF) 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR may support service categories such as enhanced mobile broadband (eMBB), ultra-reliable low-latency-communication (URLLC), and massive machine-type communication (mMTC). NR is expected to deliver extreme broadband, ultra-robust, low-latency connectivity, and massive networking to support the Internet of Things (IoT). The next generation radio access network (NG-RAN) represents the radio access network (RAN) for 5G, which may provide radio access for NR, LTE, and LTE-A. It is noted that the nodes in 5G providing radio access functionality to a user equipment (e.g., similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio.

**SUMMARY:**

In accordance with some example embodiments, a method may include determining, by a user equipment, a local oscillator in the user equipment that is used to perform at least one downlink positioning reference signal (PRS) measurement and at least one uplink sounding reference signal (SRS) transmission. The method may further include transmitting local oscillator information including at least one identifier associated with the determined local oscillator to a first network entity.

In accordance with certain example embodiments, an apparatus may include means for determining a local oscillator in the apparatus that is used to perform at least one downlink positioning reference signal (PRS) measurement and at least one uplink sounding reference signal (SRS) transmission. The apparatus may further include means for transmitting local oscillator information including at least one identifier associated with the determined local oscillator to a first network entity.

In accordance with various example embodiments, a non-transitory computer readable medium may include program instructions that, when executed by an apparatus, cause the apparatus to perform at least a method. The method may include determining a local oscillator in the apparatus that is used to perform at least one downlink positioning reference signal (PRS) measurement and at least one uplink sounding reference signal (SRS) transmission. The method may further include transmitting local oscillator information including at least one identifier associated with the determined local oscillator to a first network entity.

In accordance with some example embodiments, a computer program product may perform a method. The method may include determining a local oscillator in an apparatus that is used to perform at least one downlink positioning reference signal (PRS) measurement and at least one uplink sounding reference signal (SRS) transmission. The method may further include transmitting local oscillator information including at least one identifier associated with the determined local oscillator to a first network entity.

In accordance with certain example embodiments, an apparatus may include at least one processor and at least one memory storing instructions that, when executed by the at least one processor, cause the apparatus at least to determine a local oscillator in the apparatus that is used to perform at least one downlink positioning reference signal (PRS) measurement and at least one uplink sounding reference signal (SRS) transmission. The at least one memory and instructions, when executed by the at least one processor, may further cause the apparatus at least to transmit local oscillator information including at least one identifier associated with the determined local oscillator to a first network entity.

In accordance with various example embodiments, an apparatus may include determining circuitry configured to determine a local oscillator in the apparatus that is used to perform at least one downlink positioning reference signal (PRS) measurement and at least one uplink sounding reference signal (SRS) transmission. The apparatus may further include transmitting circuitry configured to transmit local oscillator information including at least one identifier associated with the determined local oscillator to a first network entity.

In accordance with some example embodiments, a method may include determining, by a first network entity, a local oscillator in the first network entity that is used to perform at least one downlink positioning reference signal (PRS) transmission and at least one uplink sounding reference signal (SRS) measurement. The method may further include transmitting local oscillator information including at least one identifier associated with the determined local oscillator to a second network entity.

In accordance with certain example embodiments, an apparatus may include means for determining a local oscillator in the apparatus that is used to perform at least one downlink positioning reference signal (PRS) transmission and at least one uplink sounding reference signal (SRS) measurement. The apparatus may further include means for transmitting local oscillator information including at least one identifier associated with the determined local oscillator to a first network entity.

In accordance with various example embodiments, a non-transitory computer readable medium may include program instructions that, when executed by an apparatus, cause the apparatus to perform at least a method. The method may include determining a local oscillator in the apparatus that is used to perform at least one downlink positioning reference signal (PRS) transmission and at least one uplink sounding reference signal (SRS) measurement. The method may further include transmitting local oscillator information including at least one identifier associated with the determined local oscillator to a first network entity.

In accordance with some example embodiments, a computer program product may perform a method. The method may include determining a local oscillator in an apparatus that is used to perform at least one downlink positioning reference signal (PRS) transmission and at least one uplink sounding reference signal (SRS) measurement. The method may further include transmitting local oscillator information including at least one identifier associated with the determined local oscillator to a first network entity.

In accordance with certain example embodiments, an apparatus may include at least one processor and at least one memory storing instructions that, when executed by the at least one processor, cause the apparatus at least to determine a local oscillator in the apparatus that is used to perform at least one downlink positioning reference signal (PRS) transmission and at least one uplink sounding reference signal (SRS) measurement. The at least one memory and instructions, when executed by the at least one processor, may further cause the apparatus at least to transmit local oscillator information including at least one identifier associated with the determined local oscillator to a first network entity.

In accordance with various example embodiments, an apparatus may include determining circuitry configured to determine a local oscillator in the apparatus that is used to perform at least one downlink positioning reference signal (PRS) transmission and at least one uplink sounding reference signal (SRS) measurement. The apparatus may further include transmitting circuitry configured to transmit local oscillator information including at least one identifier associated with the determined local oscillator to a first network entity.

In accordance with some example embodiments, a method may include receiving, by a location management function, from a user equipment and a network node, respectively, a first local oscillator information including at least one first identifier associated with a first determined local oscillator in the user equipment, and a second local oscillator information including at least one second identifier associated with a second determined local oscillator in the network node. The method may further include, based upon at least the received first local oscillator information and the second local oscillator information, determining a round trip time for the user equipment.

In accordance with certain example embodiments, an apparatus may include means for receiving from a user equipment and a network node, respectively, a first local oscillator information including at least one first identifier associated with a first determined local oscillator in the user equipment, and a second local oscillator information including at least one second identifier associated with a second determined local oscillator in the network node. The apparatus may further include means for, based upon at least the received first local oscillator information and the second local oscillator information, determining a round trip time for the user equipment.

In accordance with various example embodiments, a non-transitory computer readable medium may include program instructions that, when executed by an apparatus, cause the apparatus to perform at least a method. The method may include receiving from a user equipment and a network node, respectively, a first local oscillator information including at least one first identifier associated with a first determined local oscillator in the user equipment, and a second local oscillator information including at least one second identifier associated with a second determined local oscillator in the network node. The method may further include, based upon at least the received first local oscillator information and the second local oscillator information, determining a round trip time for the user equipment.

In accordance with some example embodiments, a computer program product may perform a method. The method may include receiving from a user equipment and a network node, respectively, a first local oscillator information including at least one first identifier associated with a first determined local oscillator in the user equipment, and a second local oscillator information including at least one second identifier associated with a second determined local oscillator in the network node. The method may further include, based upon at least the received first local oscillator information and the second local oscillator information, determining a round trip time for the user equipment.

In accordance with certain example embodiments, an apparatus may include at least one processor and at least one memory storing instructions that, when executed by the at least one processor, cause the apparatus at least to receive from a user equipment and a network node, respectively, a first local oscillator information including at least one first identifier associated with a first determined local oscillator in the user equipment, and a second local oscillator information including at least one second identifier associated with a second determined local oscillator in the network node. The at least one memory and instructions, when executed by the at least one processor, may further cause the apparatus at least to, based upon at least the received first local oscillator information and the second local oscillator information, determine a round trip time for the user equipment.

In accordance with various example embodiments, an apparatus may include receiving circuitry configured to receive from a user equipment and a network node, respectively, a first local oscillator information including at least one first identifier associated with a first determined local oscillator in the user equipment, and a second local oscillator information including at least one second identifier associated with a second determined local oscillator in the network node. The apparatus may further include determining circuitry configured to based upon at least the received first local oscillator information and the second local oscillator information, determine a round trip time for the user equipment.

## BRIEF DESCRIPTION OF THE DRAWINGS:

For a proper understanding of example embodiments, reference should be made to the accompanying drawings, wherein:

FIG. 1 illustrates a simplified RF architecture configured for either a user equipment or a network node with a common LO between a transmitter and a receiver;

FIG. 2 illustrates a simplified RF architecture configured for either a user equipment or a network node with a different LO for a transmitter and a receiver;

FIG. 3 illustrates an example of a signaling diagram according to certain example embodiments;

FIG. 4 illustrates an example of a flow diagram of a method that may be performed by a user equipment according to some example embodiments;

FIG. 5 illustrates an example of a flow diagram of a method that may be performed by a network entity according to various example embodiments;

FIG. 6 illustrates an example of a flow diagram of a method that may be performed by a location management function according to certain example embodiments;

FIG. 7 illustrates an example of various network devices according to some example embodiments; and

FIG. 8 illustrates an example of a 5G network and system architecture according to certain example embodiments.

## DETAILED DESCRIPTION:

It may be readily understood that the components of certain example embodiments, as generally described and illustrated in the figures herein, may be arranged and designed in a wide variety of different configurations. Different reference designations from multiple figures may be used out of sequence in the description, to refer to a same element to illustrate their features or functions. Thus, the following detailed description of some example embodiments of systems, methods, apparatuses, and computer program products for reporting LO information for RTT carrier phase positioning is not intended to limit the scope of certain example embodiments, but is instead representative of selected example embodiments.

3GPP Release (Rel)-18 includes some positioning enhancements for NR carrier phase positioning techniques. Specifically, the enhancements may include improved accuracy, integrity, and power efficiency through integrity for RAT-dependent positioning techniques. This may be accomplished by identifying power sources, as well as studying methodologies, procedures, and signaling to determine positioning integrity for both UE-based and UE-assisted positioning. In addition, there may be a focus on concepts developed for RAT-independent global navigation satellite system (GNSS) positioning integrity (when possible). Additional solutions may be related to improving accuracy based upon positioning reference signal (PRS)/sounding reference signal (SRS) bandwidth aggregation for intra-band carriers based upon, for example, timing errors, phase coherency, frequency errors, and power imbalance.

Furthermore, 3GPP Rel-18 may also consider solutions to improve accuracy based on NR carrier phase measurements. This may be accomplished using reference signals, physical layer measurements, and/or physical layer procedures to enable positioning based on NR carrier phase measurements for both UE-based and UE-assisted positioning, as well as reusing existing PRS and SRS, with new reference signals only considered if necessary.

3GPP Rel-18 may also explore the requirements for low-power, high-accuracy positioning (LPHAP), and evaluate whether existing RAN functionality may support these power consumption and positioning requirements. Based upon the evaluation, potential enhancements may be made to address to any limitations. The study may be limited to a single representative use case (*i.e.,* use case 6, as defined in 3GPP TS 22.104), as well as enhancements to RRCINACTIVE and/or RRC_IDLE state.

In general, carrier phase positioning may rely on the UE measuring the phase of a downlink (DL) signal, and reporting the measurements to the network. For example, for UE-assisted NR carrier phase positioning, the measurement may include the difference between the carrier phase measurement from the DL PRS signals of the target transmission reception point (TRP), and the carrier phase measured from the DL PRS signals of the reference TRP. The carrier phase may be measured from the DL PRS signals of a TRP. For UL UE-assisted NR carrier phase positioning, the carrier phase measured from the uplink (UL) SRS may be used for positioning purposes. Furthermore, RTT-type measurements may be supported if differential phase measurements are not used. RTT carrier phase may also be referred to as bi-directional carrier phase. RTT carrier phase may be a combination of a DL carrier phase measurement with an UL carrier phase measurement.

Overall, 3GPP Rel-18 NR positioning may include support of the carrier phase positioning by specifying physical layer measurements and signaling to support NR DL and UL carrier phase positioning for UE-based, UE-assisted, and NG-RAN node assisted positioning.

In UE-based positioning, a UE may obtain measurements from DL PRS and/or UL PRS, and may estimate its own location by using the measurements. In the UE-assisted positioning, the UE and/or gNB may obtain measurements, and the UE and/or gNB may report the measurements to the LMF. In NG-RAN node assisted positioning, the LMF may utilize the measurements provided by the gNB to estimate location of the UE. This may rely on existing DL PRS and UL SRS for positioning for NR carrier phase measurements. In addition, this may include specifying measurements that are limited to a single carrier/positioning frequency layer (PFL), and specifying corresponding new core requirements including at least radio resource management (RRM) measurements without measurement gaps in connected and inactive mode (*i.e.*, including PRS measurement period/reporting).

When a transmitter and receiver perform carrier phase positioning, there may be a random initial phase offset between the transmitter and receiver (*i.e.,* due to timing errors, frequency offsets, LO initial phases). The initial phase of a transmitter may apply to all subcarriers of the same carrier frequency associated with the transmitter, and the initial phase of a receiver may apply to all subcarriers of the same carrier frequency associated with the receiver.

If the initial phase offsets are not mitigated, carrier phase positioning may result in low accuracy, which may be mitigated by using a double differential, where a positioning reference unit (PRU) may measure the carrier phase, and allow for double differential combining at the location server (or, if UE-based, at the UE).

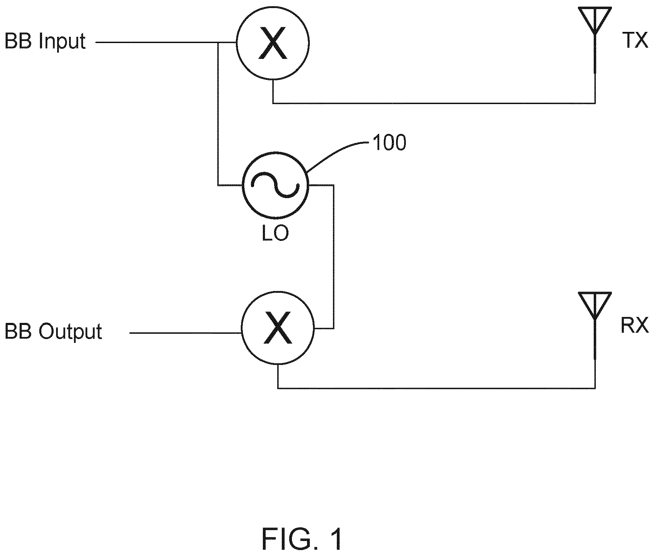

Another technique to overcome the initial phase offset between the transmitter and receiver is bi-directional carrier phase, in which the UE may measure the phase in the DL, while in the UL, the network entity (NE) (*e.g.,* eNB, gNB) may measure the phase on the same set of subcarriers. Bi-directional carrier phase may be feasible with some limitations, such as where the UE and NE use a single LO respectively, for both Rx/Tx, as shown in FIG. 1 in the example of RTT phase combination below:

$$( \varphi_{DL-phase} + N = d/\lambda + \varphi_{UE,0(LO\_x)} - \varphi_{gNB,0(LO_y)}) + ( \varphi_{UL-phase} + N =$$

$$d/\lambda + \varphi_{gNB,0(LO\_y)} - \varphi_{UE,0(LO\_x)}) = (\varphi_{DL-phase} + \varphi_{UL-phase} + 2N = 2d/\lambda) \text{ (RTT}$$

carrier phase free of initial phases).

carrier phase free of initial phases).

The terms may be expanded as follows:

$$\phi_{UE}(f_k, d) = -2\pi f_k \left(\frac{d}{c} - \Delta_t\right) - \theta \ (\text{mod } 2\pi)$$

$$\phi_{gNB}(f_k, d) = -2\pi f_k \left(\frac{d}{c} + \Delta_t\right) + \theta \ (\text{mod } 2\pi)$$

, wherein $\theta$ may denote the (hardware) phase difference between the target UE and serving NE oscillator, and *d* may be the distance between the TRP and the target UE.

Assuming use of the same LO for both Rx/Tx, to mitigate the clock offsets and/or (hardware) phase offsets of oscillator as given as:

$$\phi_k = \phi_{gNB}(f_k, d) + \phi_{UE}(f_k, d) = -\frac{4\pi f_k d}{c} \ (\mathrm{mod}\ 2\pi)$$

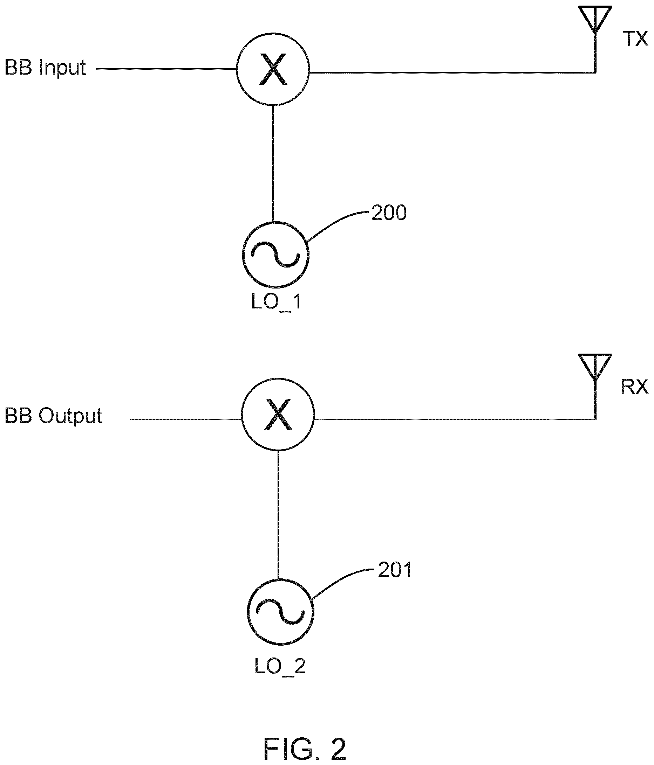

Here, the NE and UE may have different LOs (*e.g.,* 200, 210 in FIG. 2); however, the same LO (*e.g.,* 100 in FIG. 1) may be used for both Rx/Tx directions for a given entity. However, the location server may be unaware of when this condition is being met.

FIG. 1 depicts an example of a UE with a same shared local oscillator (LO) 100 architecture between Tx and Rx chains at the UE. In an example, another same shared LO 100 architecture may also apply to the NE. In this case, the Rx signal used for DL carrier phase measurement, and the Tx signal used for UL carrier phase measurement, may be affected by the same initial phase offset.

FIG. 2 illustrates an example that may be used for Tx and Rx chains in the UE and the NE, respectively. In this case, the Rx signal used for DL carrier phase measurement, and the Tx signal used for UL carrier phase measurement, may not be affected by the same initial phase offset. However, these RF architecture details may not be disclosed between the UE and the NE.

Certain example embodiments described herein may have various benefits and/or advantages to overcome certain disadvantages described above. For example, certain example embodiments may ensure high accuracy carrier phase positioning and/or provide lower complexity than PRU-based solutions. Thus, certain example embodiments discussed below are directed to improvements in computer-related technology.

Some example embodiments herein are described in terms of SRS and PRS; however, it is noted that any DL and UL reference signals may be used for positioning.

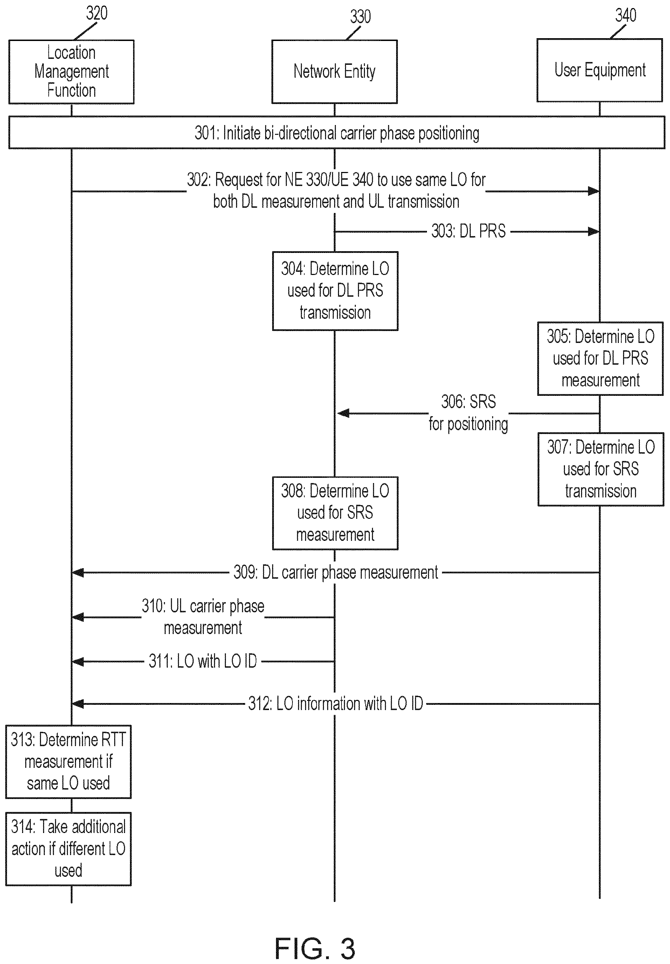

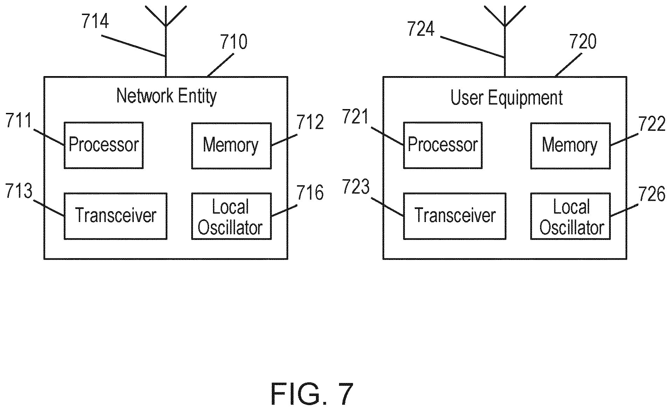

FIG. 3 illustrates an example of a signaling diagram depicting for reporting LO information for RTT carrier phase positioning. Specifically, various example embodiments may report information related to the LO 716 which may be used for particular transmissions/receptions related to carrier phase positioning. LMF 320 and NE 330 may be similar to NE 710, while UE 340 may be similar to UE 720, as illustrated in FIG. 7, according to certain example embodiments.

In certain example embodiments, UE 340 may be configured for bi-directional carrier phase positioning. For example, UE 340 may be configured with DL PRS or other RS for DL carrier phase measurements. In some example embodiments, UE 340 may be configured with SRS or other RS for UL transmission; similarly, NE 330 may be configured to measure UL carrier phase on these UL transmissions. In various example embodiments, LMF 320 may configure the signals such that the frequency used for both are the same (or as close as possible) in order to minimize differences in the phase offsets.

At step 301, LMF 320, NE 330, and UE 340 may initiate bi-directional carrier phase positioning.

At step 302, LMF 320 may request UE 340 to use the same LO (726) for both DL measurements and UL transmissions. It is noted that uplink carrier phase measurements (step 309) are one type of uplink SRS measurements, and downlink carrier phase measurement is one type of downlink PRS measurement. UE 340 may indicate to NE 330 a capability to use the same LO (726) for both DL measurements (step 303) and UL measurements (step 306) for certain bands. For example, LMF 320 may indicate (step 302) to UE 340 to use the same LO (726) for both the DL measurement (step 303) and UL transmission (step 306), if possible. In this way, LMF 320 may provide a set of information to UE 340 including any of LO identifier (ID), PRS resource ID(s), and SRS resource ID(s).

In some example embodiments, LMF 320 may indicate (step 302) to NE 330 to use another same LO (*e.g.,* LO 716) in the NE 330 for both the DL transmission (step 303) and UL measurement (step 310), if possible. In this example, LMF 320 may indicate a set of information including LO ID, PRS resource ID(s), and SRS resource ID(s) to NE 330.

In certain example embodiments, at step 303, NE 330 may transmit DL PRS to UE 340, and at step 304, NE 330 may determine the another LO (716) used for DL PRS transmission.

In various example embodiments, at step 305, UE 340 may determine the LO used for DL PRS measurements. For example, UE 340 may measure DL PRS, and determine the LO used in the receiver chain for DL PRS measurements of carrier phase (step 305). UE 340 may determine this information based partially on the antenna(s) or antenna panel and RF chain used for the DL PRS reception. At step 306, UE 340 may transmit SRS for positioning to NE 330.

At step 307, UE 340 may determine the LO used for SRS transmissions; specifically, UE 340 may determine the LO used in the transmitter chain for SRS transmission. UE 340 may determine this information based partially on the antenna(s) or antenna panel and RF chain used for the SRS transmission.

At step 308, NE 330 may determine the LO used for UL SRS carrier phase measurement.

At step 309, UE 340 may report information to LMF 320 information about the LOs used (*e.g.*, over LTE Positioning Protocol (LPP)). The reported information may include any of carrier phase measurement, LO ID, PRS resource ID(s), SRS resource ID(s), and time stamp.

In certain example embodiments, UE 340 may indicate to LMF 320 whether the LO (726) is the same in a given DL carrier phase measurement (step 305) and a particular SRS transmission (step 307). For example, UE 340 may indicate in the report of a DL carrier phase measurement (step 309) if the LO (726) is the same as used in the next SRS transmission in time.

In some example embodiments, UE 340 may assign a LO ID to each DL carrier phase measurement and each SRS transmission. If the same LO ID is assigned to a DL carrier phase measurement and SRS transmission, LMF 320 may understand this as the same LO should be used for both. The LO ID may be assigned per SRS resource, or alternatively, per SRS transmission occasion.

At step 310, NE 330 may report UL carrier phase measurements to LMF 320.

At step 311, NE 330 may report information to LMF 320 about the LOs used (*e.g.,* over NR Positioning Protocol A (NRPPa)). The information reported by NE 330 may include any of the UL carrier phase measurement (step 310), LO ID, PRS resource ID(s), SRS resource ID(s), and time stamp.

At step 312, UE 340 may report LO information with LO IDs to LMF 320.

At step 313, LMF 320 may determine whether the same LO ID has been assigned to both UL and DL phase measurements; if so, LMF 320 may use them (*i.e.,* the same LO ID) to form a RTT measurement. After using RTT measurements from multiple network entities (*e.g.,* NE 330), the LMF 320 may calculate the location of UE 340 using legacy positioning algorithms.

In certain example embodiments, for the DL and UL carrier phase measurements (steps 309, 310) obtained from the same PRS resource ID(s), SRS resource ID(s), and the same LO ID, LMF 320 may use the DL and UL carrier phase (CP) measurements (steps 309, 310) to form the RTT measurement (step 313).

At step 314, if different LO IDs have been assigned to and used by one or both of the UE 340 and NE 330 for both UL and DL carrier phase measurements (steps 309, 310), LMF 320 may then request additional positioning measurements from the UE 340 and/or PRU.

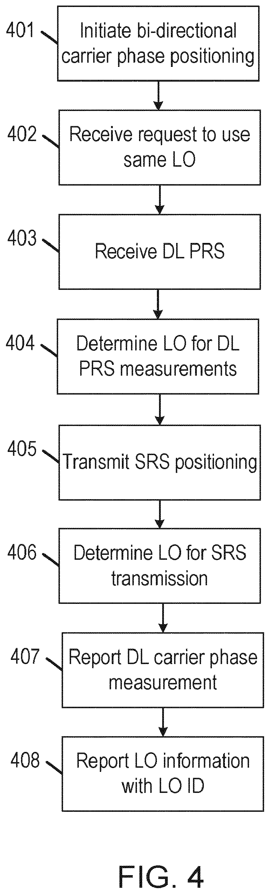

FIG. 4 illustrates an example of a flow diagram of a method for reporting LO information for RTT carrier phase positioning that may be performed by a UE 340, such as UE 720 illustrated in FIG. 7, according to various example embodiments. Specifically, various example embodiments may report information related to the LO (726) which may be used for particular transmissions/receptions related to carrier phase positioning.

In certain example embodiments, the UE 340 may be configured for bi-directional carrier phase positioning. For example, the UE 340 may be configured with DL PRS or other RS for DL carrier phase measurements (step 303). In some example embodiments, the UE 340 may be configured with SRS or other RS (reference signal) for UL transmission (step 306); similarly, a NE 330 (which may be a gNB or an anchor UE, similar to NE 710 in FIG. 7) may be configured to measure UL carrier phase on these UL transmissions (step 310). In various example embodiments, an LMF 320 (which may be the same or another NE similar to NE 710) may configure the signals such that the frequency used for both are the same (or as close as possible) in order to minimize differences in the phase offsets.

At step 401, the method may include initiating bi-directional carrier phase positioning.

At step 402, the method may include receiving a request from the LMF to use the same LO 726 for both DL measurements and UL transmissions. In addition, the UE 340 may indicate to the NE 330 a capability to use the same LO for both DL measurements and UL measurements for certain bands. For example, the request may indicate to the UE to use the same LO 726 for both the DL measurement and UL transmission, if possible. In this way, the UE 340 may receive a set of information including any of LO ID, PRS resource ID(s), and SRS resource ID(s).

In certain example embodiments, at step 403, the method may include receiving DL PRS from the NE.

In various example embodiments, at step 404, the method may include determining the LO used for DL PRS measurements. For example, the UE may measure DL PRS, and determine the LO used in the receiver chain for DL PRS measurements of carrier phase. The UE 340 may determine this information based partially on the antenna(s) or antenna panel and RF chain used for the DL PRS reception. At step 405, the method may include transmitting SRS for positioning to the NE 330.

At step 406, UE 340 may determine LO 726 used for SRS transmissions; specifically, the UE 340 may determine the LO 726 used in the transmitter chain for SRS transmission. The UE may determine this information based partially on the antenna(s) or antenna panel and RF chain used for the SRS transmission.

At step 407, the method may include the UE 340 reporting information to the LMF 320 information about the LOs used (e.g., over LPP). The reported information may include any of carrier phase measurement, LO ID, PRS resource ID(s), SRS resource ID(s), and time stamp.

In certain example embodiments, the UE 340 may indicate to the LMF 320, whether the LO 726 is the same in a given DL carrier phase measurement and a particular SRS transmission. For example, the UE may indicate in the report of a DL carrier phase measurement if the LO 726 is the same as used in the next SRS transmission in time.

In some example embodiments, the UE may assign a LO ID to each DL carrier phase measurement and each SRS transmission. If the same LO ID is assigned to a DL carrier phase measurement and SRS transmission, the LMF 320 may understand this as the same LO 726 is used for both. The LO ID may be assigned per SRS resource, or alternatively, per SRS transmission occasion.

At step 408, the method may include reporting LO information with LO IDs to the LMF 320.

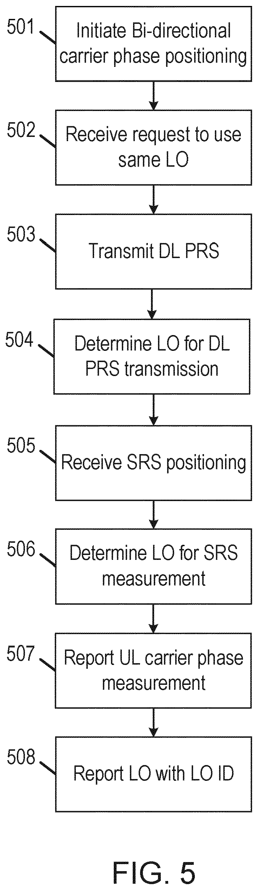

FIG. 5 illustrates an example of a flow diagram of a method for reporting LO information for RTT carrier phase positioning that may be performed by a NE 330, such as NE 710 illustrated in FIG. 7, according to various example embodiments. Specifically, various example embodiments may report information related to the LO 716 which may be used for particular transmissions/receptions related to carrier phase positioning.

In certain example embodiments, a UE 340 (which may be similar to UE 720) may be configured for bi-directional carrier phase positioning. For example, the UE 340 may be configured with DL PRS or other RS for DL carrier phase measurements (step 303). In some example embodiments, the UE 340 may be configured with SRS or other RS (reference signal) for UL transmission (step 306); similarly, the NE 330 (which may be a gNB or an anchor UE, similar to NE 710 illustrated in FIG. 7) may be configured to measure UL carrier phase on these UL transmissions (step 310). In various example embodiments, an LMF 320 (which may be the same or another NE similar to NE 710) may configure the signals such that the frequency used for both are the same (or as close as possible) in order to minimize differences in the phase offsets.

At step 501, the method may include initiating bi-directional carrier phase positioning.

At step 502, the method may include receiving a request from the LMF to use the same LO 716 for both DL measurements and UL transmissions. In some example embodiments, the request may indicate to use the same LO 716 for both the DL transmission and UL measurement, if possible. In this example, the request may indicate a set of information including LO ID, PRS resource ID(s), and SRS resource ID(s).

In certain example embodiments, at step 503, the method may include transmitting DL PRS to the UE 340, and at step 504, the method may include determining a LO 716 used for DL PRS transmission.

At step 505, the method may include receiving SRS for positioning from the UE 340.

At step 506, the method may include determining the LO 716 used for UL SRS carrier phase measurement.

At step 507, the method may include reporting UL carrier phase measurements to the LMF 320.

At step 508, the method may include reporting information to the LMF 320 about the LOs 716 used (*e.g.*, over NR Positioning Protocol A (NRPPa)). The information reported by the NE 330 may include any of carrier phase measurement, LO ID, PRS resource ID(s), SRS resource ID(s), and time stamp.

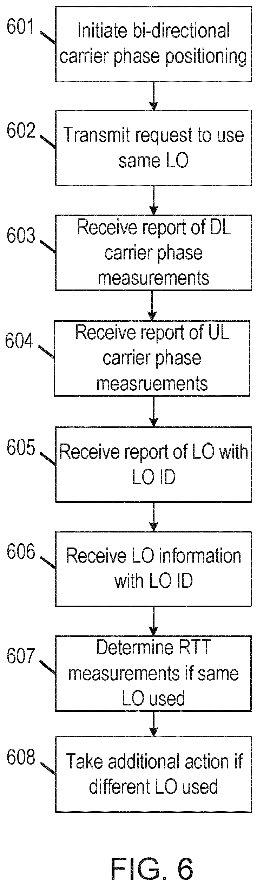

FIG. 6 illustrates an example of a flow diagram of a method for reporting LO information for RTT carrier phase positioning that may be performed by an LMF 320, such as NE 710 illustrated in FIG. 7, according to various example embodiments.

In certain example embodiments, a UE 340 (which may be similar to UE 720) may be configured for bi-directional carrier phase positioning. For example, the UE 340 may be configured with DL PRS or other RS for DL carrier phase measurements. In some example embodiments, the UE 340 may be configured with SRS or other RS for UL transmission (see step 306); similarly, a NE 330 (which may be similar to UE 720) may be configured to measure UL carrier phase on these UL transmissions (see step 310). In various example embodiments, a LMF 320 may configure the signals such that the frequency used for both are the same (or as close as possible) in order to minimize differences in the phase offsets (see step 313).

At step 601, the method may include initiating bi-directional carrier phase positioning (step 301).

At step 602, the method may include the LMF 320 requesting the UE 340 to use the same LO 716 for both DL measurements and UL transmissions (step 302). In addition, the UE 340 may indicate to the NE 330 a capability to use the same LO 716 for both DL measurements and UL measurements for certain bands (step 302). For example, the LMF 320 may indicate to the UE 340 to use the same LO 716 for both the DL measurement and UL transmission (step 306), if possible. In this way, the LMF 320 may provide a set of information to the UE 340 including any of LO ID, PRS resource ID(s), and SRS resource ID(s).

In some example embodiments, the LMF 320 may indicate to a NE 330 to use the same LO 716 for both the DL transmission and UL measurement (step 302), if possible. In this example, the LMF 320 may indicate a set of information including LO ID, PRS resource ID(s), and SRS resource ID(s) to the NE 330.

At step 603, the method may include receiving information from the UE 340 about the LOs 716 used (step 309) (*e.g.,* over LPP). The reported information may include any of carrier phase measurement, LO ID, PRS resource ID(s), SRS resource ID(s), and time stamp.

In certain example embodiments, the LMF 320 may receive information indicating whether the LO 716 is the same in a given DL carrier phase measurement and a particular SRS transmission (step 307). For example, the LMF 320 may receive information indicating in the report of a DL carrier phase measurement (step 309) if the LO 716 is the same as used in the next SRS transmission in time.

In some example embodiments, the information may assign a LO ID to each DL carrier phase measurement and each SRS transmission. If the same LO ID is assigned to a DL carrier phase measurement and SRS transmission, the LMF 320 may understand this as the same LO should be used for both. The LO ID may be assigned per SRS resource, or alternatively, per SRS transmission occasion.

At step 604, the method may include receiving UL carrier phase measurements from the NE 330 (step 310).

At step 605, the method may include receiving from the NE 330 information about the LOs 716 used (step 311) (*e.g.,* over NRPPa). The information received from the NE 330 may include any of carrier phase measurement (step 310), LO ID, PRS resource ID(s), SRS resource ID(s), and time stamp.

At step 606, the method may include receiving LO information with LO IDs from the UE 340 (step 312).

At step 607, the method may include determining whether the same LO ID has been assigned to both UL and DL phase measurements (step 313); if so, the LMF 320 may use them to form a RTT measurement. After using RTT measurements from multiple NEs 330 (*e.g.,* NE 330), the LMF 320 may calculate the location of the UE 340 using legacy positioning algorithms.

In certain example embodiments, for the DL and UL carrier phase measurements obtained from the same PRS resource ID(s), SRS resource ID(s), and the same LO ID, the LMF 320 may use the DL and UL CP measurements to form the RTT measurement.

At step 608, if a different LO ID has been assigned to both UL and DL phase measurements, the method may include requesting additional positioning measurements from the UE 340 and/or PRU (step 314).

In some example embodiments, a phase tracking reference signal (PTRS) may be used to estimate phase offsets. The PTRS may be associated with the physical downlink shared channel (PDSCH) and physical uplink shared channel (PUSCH). These phase offsets may also be used to correct the bi-directional RTT measurements or to create additional differential measurements. Although the descriptions above use signaling flow between a single target UE 340 and a single NE 330, these descriptions may be extended to, for example, device-to-device (D2D) and sidelink (SL) scenarios. For example, a SL-target UE (T-UE) and SL-supporting UE (S-UE) may be configured for bi-directional carrier phase positioning; in such a configuration, both UEs (T-UE and S-UE 340) may report the information related to the use of the LO 716 for particular SL transmissions and/or receptions related to RTT carrier phase positioning measurements. This may be further supported in a configuration where an LMF 320 or NE 330 may indicate to the S-UE to use the same LO 716 for both the DL measurement and UL transmission, if possible. In this way, the LMF 320 or NE 330 may provide the S-UE 340 with a set of information on any of LO ID, SL-PRS resource ID(s), and SL-SRS resource ID(s). A SL-supporting UE 340 may also be called an anchor UE 340.

In another example embodiment, the NE 330 or LMF 320 may indicate to the T-UE 340 to use the same LO 716 for both the DL transmission and UL measurement (or SL PRS transmission and SL PRS reception), if possible; thus, the NE 330 or LMF 320 may provide the T-UE 340 with a set of information on any of LO ID, PRS resource ID(s), and SRS resource ID(s).

In another example embodiment, if a different LO 716 has been assigned to both UL and DL carrier phase measurements (or SL PRS transmission and SL PRS reception), either at S-UE 340 or at T-UE 340, the NE 330 or LMF 320 may then request additional positioning measurements.

It is noted that some example embodiments may be related to the SL positioning of a UE 340 with the help of other UE 340 (*i.e.,* serving as anchors by transmitting and/or receiving SL positioning reference signals (SL-PRS and SL-SRS)).

FIG. 7 illustrates an example of a system according to certain example embodiments. In one example embodiment, a system may include multiple devices, such as, for example, NE 710 and/or UE 720.

NE 710 may be one or more of a base station (*e.g.,* 3G UMTS NodeB, 4G LTE Evolved NodeB, or 5G NR Next Generation NodeB), a serving gateway, a server, and/or any other access node or combination thereof.

NE 710 may further include at least one gNB-centralized unit (CU), which may be associated with at least one gNB-distributed unit (DU). The at least one gNB-CU and the at least one gNB-DU may be in communication via at least one F1 interface, at least one $X_n$-C interface, and/or at least one NG interface via a 5th generation core (5GC).

UE 720 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, NE 710 and/or UE 720 may be one or more of a citizens broadband radio service device (CBSD).

NE 710 and/or UE 720 may include at least one processor, respectively indicated as 711 and 721. Processors 711 and 721 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 712 and 722. The memory may be fixed or removable. The memory may include computer program instructions or computer code contained therein. Memories 712 and 722 may independently be any suitable storage device, such as a non-transitory computer-readable medium. The term "non-transitory," as used herein, may correspond to a limitation of the medium itself (*i.e.,* tangible, not a signal) as opposed to a limitation on data storage persistency (*e.g.,* random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processors 711 and 721, memories 712 and 722, and any subset thereof, may be configured to provide means corresponding to the various blocks of FIGs. 3-6. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 7, transceivers 713 and 723 may be provided, and one or more devices may also include at least one antenna, respectively illustrated as 714 and 724. The device may have many antennas, such as an array of antennas configured for multiple input multiple output (MIMO) communications, or multiple antennas for multiple RATs. Other configurations of these devices, for example, may be provided. Transceivers 713 and 723 may be a transmitter, a receiver, both a transmitter and a receiver, or a unit or device that may be configured both for transmission and reception.

NE 710 may include LO 716, and UE 720 may include LO 726. LO 716 and/or LO 726 may include an electronic oscillator configured to adjust frequencies of a signal, such as with a mixer. For example, LO 716 and/or LO 726 may be configured to perform heterodyning, wherein a sum and difference between frequencies may be produced from a frequency of the respective oscillator, as well as a frequency of an input signal.

The memory and the computer program instructions may be configured, with the processor for the particular device, to cause a hardware apparatus, such as UE, to perform any of the processes described above (i.e., FIGs. 3-6). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus 720 may include at least one processor 721 and at least one memory 722 storing instructions that, when executed by the at least one processor, cause the apparatus at least to determine a LO 726 in the apparatus 720 that is used to perform at least one downlink positioning reference signal (PRS) measurement (step 305) and at least one uplink sounding reference signal (SRS) transmission (step 307), and transmit LO information (step 312) including at least one identifier associated with the determined LO to a first network entity 320.

In some further example embodiments, the at least one memory and the instructions, when executed by the at least one processor, may further cause the apparatus at least to receive a request (step 302) from the first network entity 320 to use a same LO 726 for both the downlink PRS measurements (step 305) and the uplink SRS transmissions (step 307).

In various further example embodiments, the request may include one or more of at least an identifier (LO ID) of the same LO 726, at least one downlink PRS measurement (step 305), at least one positioning reference signal resource identifier, or at least one sounding reference signal resource identifier.

In certain further example embodiments, the at least one memory and the instructions, when executed by the at least one processor, may further cause the apparatus at least to, when the apparatus 340 does not use the same local oscillator for both the downlink PRS measurements (step 305) and the uplink SRS transmissions (step 307), report to the first network entity different identifiers (*e.g.,* LO ID1, LO ID2) of corresponding different local oscillators, wherein one identifier (*e.g.,* LO ID1) may be used for the downlink PRS measurements and another identifier (*e.g.,* LO ID2) may be used for the uplink SRS transmissions (step 307), respectively.

In some further example embodiments, the at least one memory and the instructions, when executed by the at least one processor, may further cause the apparatus 720 at least to receive the at least one downlink positioning reference signal (PRS) from a second network entity 710, and transmit a report including the downlink carrier phase measurement to the first network entity.

In various further example embodiments, the apparatus may include a user equipment 340, the first network entity may include a location management function 320, and the second network entity may include a radio network node or an anchor user equipment 340.

In certain further example embodiments, the at least one memory and the instructions, when executed by the at least one processor, may further cause the apparatus at least to, wherein if the second network entity is an anchor user equipment 330, communicate at least one of a sidelink positioning reference signal or the sounding reference signal via a sidelink interface between the anchor user equipment 330 and the user equipment 340.

In some further example embodiments, the at least one memory and the instructions, when executed by the at least one processor, may further cause the apparatus at least to determine a local oscillator partially based on an antenna or antenna panel and radio frequency chain used for the SRS transmission (step 307).

In various further example embodiments, the at least one memory and the instructions, when executed by the at least one processor, further cause the apparatus at least to transmit local oscillator information whether the same oscillator was used for downlink measurements and uplink transmissions (step 312).

In certain example embodiments, an apparatus 710 may include at least one processor 711 and at least one memory 712 storing instructions that, when executed by the at least one processor, cause the apparatus at least to determine a local oscillator 726 in the apparatus 710 that is used to perform at least one downlink positioning reference signal (PRS) transmission (step 304) and at least one uplink sounding reference signal (SRS) measurement (step 308), and transmit local oscillator information (step 311) including at least one identifier associated with the determined local oscillator to a first network entity 320.

In some further example embodiments, the at least one memory and the instructions, when executed by the at least one processor, may further cause the apparatus at least to receive a request (step 302) from the first network entity 320 to use a same local oscillator 326 for both the downlink PRS transmissions (step 304) and the uplink SRS measurements (step 307).

In various further example embodiments, the request may include one or more of at least an identifier of the same local oscillator 726, the at least one uplink SRS measurement (step 308), at least one positioning reference signal resource identifier, or at least one sounding reference signal resource identifier.

In certain further example embodiments, the at least one memory and the instructions, when executed by the at least one processor, may further cause the apparatus at least to, when the apparatus 340 does not use the same local oscillator for both the downlink PRS transmissions (step 304) and the uplink SRS measurements (step 308), report to the network entity different identifiers (*e.g.*, LO ID1, LO ID2) of corresponding different local oscillators, wherein one identifier (*e.g.*, LO ID1) is configured for the downlink PRS measurements and another identifier (*e.g.*, LO ID2) is configured for uplink SRS measurements (step 308), respectively.

In some further example embodiments, the at least one memory and the instructions, when executed by the at least one processor, may further cause the apparatus at least to transmit a downlink positioning reference signal to a user equipment 340 (step 303), and receive a sounding reference signal configured for positioning step (306) from the user equipment 340.

In various further example embodiments, the at least one memory and the instructions, when executed by the at least one processor, may further cause the apparatus at least to transmit a report (step 310) including the at least one uplink carrier phase measurement to the network entity 320.

In certain further example embodiments, the apparatus may include a radio network node or an anchor user equipment 340, and the apparatus may include a network entity 330.

In some further example embodiments, the at least one memory and the instructions, when executed by the at least one processor, may further cause the apparatus at least to transmit a report including the at least one uplink carrier phase measurement (step 310) to the network entity 320.

In various further example embodiments, the at least one memory and the instructions, when executed by the at least one processor, may further cause the apparatus at least to, wherein if the second network entity is an anchor user equipment 300, communicate at least one of a sidelink positioning reference signal or the sounding reference signal via a sidelink interface between the anchor user equipment 330 and the user equipment 340.

In certain further example embodiments, the at least one memory and the instructions, when executed by the at least one processor, may further cause the apparatus at least to transmit local oscillator information whether the same oscillator was used for downlink measurements and uplink transmissions (step 311).

In certain example embodiments, an apparatus may include at least one processor and at least one memory storing instructions that, when executed by the at least one processor, cause the apparatus at least to receive from a user equipment 340 and a network node 330, respectively, a first local oscillator information (step 312) including at least one first identifier associated with a first determined local oscillator in the user equipment 340, and a second local oscillator information (step 311) including at least one second identifier associated with a second determined local oscillator in the network node 330, and, based upon at least the received first local oscillator information (step 321) and the second local oscillator information (step 312), determine a round trip time for the user equipment (step 313).

In certain further example embodiments, the at least one memory and the instructions, when executed by the at least one processor, may further cause the apparatus at least to transmit a request to use the same local oscillator for both downlink measurements (step 304) and uplink transmissions (step 308).

In some further example embodiments, the at least one memory and the instructions, when executed by the at least one processor, may further cause the apparatus at least to transmit a first request (step 302) to the user equipment 340 to use a same first local oscillator 326 for both downlink positioning reference signal (PRS) measurements (step 304) and at least one sounding reference signal (SRS) transmissions (step 307) to the network node 330, and transmit a second request (step 302) to the network node 330 to use a same second local oscillator for both downlink PRS transmissions (step 304) to the user equipment 340 and uplink SRS measurements (step 308) of the user equipment 340.

In various further example embodiments, the round trip time for the user equipment 340 may be based at least upon when the user equipment 340 using the same first local oscillator for both the downlink PRS measurements and the uplink SRS transmissions, and when the network node 330 using a same second local oscillator for both downlink PRS transmissions to the user equipment 340 and uplink SRS measurements of the user equipment 340.

In various further example embodiments, the first local oscillator information may indicate at least one of the user equipment 340 is using the same first local oscillator for both the downlink PRS measurements and the uplink SRS transmissions, or the user equipment 340 is not using the same first local oscillator for both the downlink PRS measurements and the uplink SRS transmissions.

In certain further example embodiments, the second local oscillator information may indicate at least one of the network node 330 uses a same second local oscillator for both downlink PRS transmissions to the user equipment 340 and uplink SRS measurements of the user equipment 340, or the network node 330 does not use a same second local oscillator for both downlink PRS transmissions to the user equipment 340 and uplink SRS measurements of the user equipment 340.

In certain further example embodiments, the round trip time for the user equipment 340 may include a bi-directional carrier phase measurement, based on summing a first downlink carrier phase measurement obtained by the user equipment 340 and a second uplink carrier phase measurement obtained by the network node 330.

In some further example embodiments, the first request may include one or more of at least an identifier of the same first local oscillator (LO ID1), at least one downlink carrier phase measurement, at least one positioning reference signal resource identifier, or at least one sounding reference signal resource identifier, and the second request may include one or more of at least an identifier of the same second local oscillator (LO ID2), at least one uplink carrier phase measurement, the at least one positioning reference signal resource identifier, or the at least one sounding reference signal resource identifier.

In various further example embodiments, the at least one memory and the instructions, when executed by the at least one processor, may further cause the apparatus at least to, in case the user equipment does not use the same first local oscillator for both the downlink PRS measurements and the uplink SRS transmissions, receive (step 312), from the user equipment 340, different first identifiers of corresponding different first local oscillators, each used for the downlink PRS measurements and the uplink SRS transmissions, respectively.

In certain further example embodiments, the at least one memory and the instructions, when executed by the at least one processor, may further cause the apparatus at least to, in case the network node 330 does not use the same second local oscillator for both the downlink PRS transmissions to the user equipment 340 and the uplink SRS measurements of the user equipment 340, report (step 302) to the apparatus different identifiers of corresponding different second local oscillators, each used for the downlink PRS transmissions and the uplink SRS measurements, respectively.

In some further example embodiments, the at least one memory and the instructions, when executed by the at least one processor, may further cause the apparatus at least to receive a report including an uplink (step 310) or downlink (step 309) carrier phase measurement.

In certain example embodiments, an apparatus may include means for determining a local oscillator in the apparatus that is used to perform at least one downlink positioning reference signal (PRS) measurement and at least one uplink sounding reference signal (SRS) transmission, and means for transmitting local oscillator information including at least one identifier associated with the determined local oscillator to a first network entity.

In some further example embodiments, the apparatus may further include means for receiving a request from the first network entity to use a same local oscillator for both the downlink PRS measurements and the uplink SRS transmissions.

In various further example embodiments, the request may include one or more of at least an identifier of the same local oscillator (LO ID), at least one downlink PRS measurement, at least one positioning reference signal resource identifier, or at least one sounding reference signal resource identifier.

In certain further example embodiments, the apparatus may include, when the apparatus does not use the same local oscillator for both the downlink PRS measurements and the uplink SRS transmissions, means for reporting to the first network entity different identifiers of corresponding different local oscillators, wherein one identifier is configured for the downlink PRS measurements and another identifier is configured for uplink SRS transmissions, respectively.

In some further example embodiments, the apparatus may further include means for receiving the at least one downlink positioning reference signal (PRS) from a second network entity, and means for transmitting a report including the downlink carrier phase measurement to the first network entity.

In various further example embodiments, the apparatus may include a user equipment, the first network entity may include a location management function, and the second network entity may include a radio network node or an anchor user equipment.

In certain further example embodiments, the apparatus may include, wherein if the second network entity is an anchor user equipment, means for communicating at least one of a sidelink positioning reference signal or the sounding reference signal via a sidelink interface between the anchor user equipment and the user equipment.

In some further example embodiments, the apparatus may include means for determining a local oscillator partially based on an antenna or antenna panel and radio frequency chain used for the SRS transmission.

In various further example embodiments, the apparatus may include means for transmitting local oscillator information whether the same oscillator was used for downlink measurements and uplink transmissions.

In certain example embodiments, an apparatus may include means for determining a local oscillator in the apparatus that is used to perform at least one downlink positioning reference signal (PRS) transmission and at least one uplink sounding reference signal (SRS) measurement, and means for transmitting local oscillator information including at least one identifier associated with the determined local oscillator to a first network entity.

In some further example embodiments, the apparatus may include means for receiving a request from the first network entity to use a same local oscillator for both the downlink PRS transmissions and the uplink SRS measurements.

In various further example embodiments, the request may include one or more of at least an identifier of the same local oscillator, the at least one uplink SRS measurement, at least one positioning reference signal resource identifier, or at least one sounding reference signal resource identifier.

In certain further example embodiments, the apparatus may include, when the apparatus does not use the same local oscillator for both the downlink PRS transmissions and the uplink SRS measurements, means for reporting to the network entity different identifiers of corresponding different local oscillators, wherein one identifier is configured for the downlink PRS measurements and another identifier is configured for uplink SRS measurements, respectively.

In some further example embodiments, the apparatus may include means for transmitting a downlink positioning reference signal to a user equipment, and means for receiving a sounding reference signal configured for positioning from the user equipment.

In various further example embodiments, the apparatus may include means for transmitting a report including the at least one uplink carrier phase measurement to the network entity.

In certain further example embodiments, the apparatus may include a radio network node or an anchor user equipment, and the apparatus may include a network entity.

In some further example embodiments, the apparatus may include means for transmitting a report including the at least one uplink carrier phase measurement to the network entity.

In various further example embodiments, the apparatus may include, wherein if the second network entity is an anchor user equipment, means for communicating at least one of a sidelink positioning reference signal or the sounding reference signal via a sidelink interface between the anchor user equipment and the user equipment.

In certain further example embodiments, the apparatus may include means for transmitting local oscillator information whether the same oscillator was used for downlink measurements and uplink transmissions.

In certain example embodiments, an apparatus may include means for receiving from a user equipment and a network node, respectively, a first local oscillator information including at least one first identifier associated with a first determined local oscillator in the user equipment, and a second local oscillator information including at least one second identifier associated with a second determined local oscillator in the network node, and, based upon at least the received first local oscillator information and the second local oscillator information, means for determining a round trip time for the user equipment.

In some further example embodiments, the apparatus may include means for transmitting a request to use the same local oscillator for both downlink measurements and uplink transmissions.

In various further example embodiments, the apparatus may include means for transmitting a first request to the user equipment to use a same first local oscillator for both downlink positioning reference signal (PRS) measurements and at least one sounding reference signal (SRS) transmissions to the network node, and means for transmitting a second request to the network node to use a same second local oscillator for both downlink PRS transmissions to the user equipment and uplink SRS measurements of the user equipment.

In certain further example embodiments, the round trip time for the user equipment is based at least upon when the user equipment using the same first local oscillator for both the downlink PRS measurements and the uplink SRS transmissions, and when the network node using a same second local oscillator for both downlink PRS transmissions to the user equipment and uplink SRS measurements of the user equipment.

In various further example embodiments, the first local oscillator information may indicate at least one of the user equipment is using the same first local oscillator for both the downlink PRS measurements and the uplink SRS transmissions, or the user equipment is not using the same first local oscillator for both the downlink PRS measurements and the uplink SRS transmissions.

In certain further example embodiments, the second local oscillator information may indicate at least one of the network node uses a same second local oscillator for both downlink PRS transmissions to the user equipment and uplink SRS measurements of the user equipment, or the network node does not use a same second local oscillator for both downlink PRS transmissions to the user equipment and uplink SRS measurements of the user equipment.

In some further example embodiments, the round trip time for the user equipment may include a bi-directional carrier phase measurement, based on summing a first downlink carrier phase measurement obtained by the user equipment and a second uplink carrier phase measurement obtained by the network node.

In various further example embodiments, the first request may include one or more of at least an identifier of the same first local oscillator (LO ID1), at least one downlink carrier phase measurement, at least one positioning reference signal resource identifier, or at least one sounding reference signal resource identifier, and the second request may include one or more of at least an identifier of the same second local oscillator (LO ID2), at least one uplink carrier phase measurement, the at least one positioning reference signal resource identifier, or the at least one sounding reference signal resource identifier.

In certain further example embodiments, the apparatus may include, in case the user equipment does not use the same first local oscillator for both the downlink PRS measurements and the uplink SRS transmissions, means for receiving, from the user equipment, different first identifiers of corresponding different first local oscillators, each used for the downlink PRS measurements and the uplink SRS transmissions, respectively.

In some further example embodiments, the apparatus may include, in case the network node does not use the same second local oscillator for both the downlink PRS transmissions to the user equipment and the uplink SRS measurements of the user equipment, means for reporting to the apparatus, different identifiers of corresponding different second local oscillators, each used for the downlink PRS transmissions and the uplink SRS measurements, respectively.

In various further example embodiments, the apparatus may include means for receiving a report including an uplink or downlink carrier phase measurement.

In certain example embodiments, an apparatus may include circuitry configured to perform any of the processes or functions illustrated in FIGs. 3-6. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

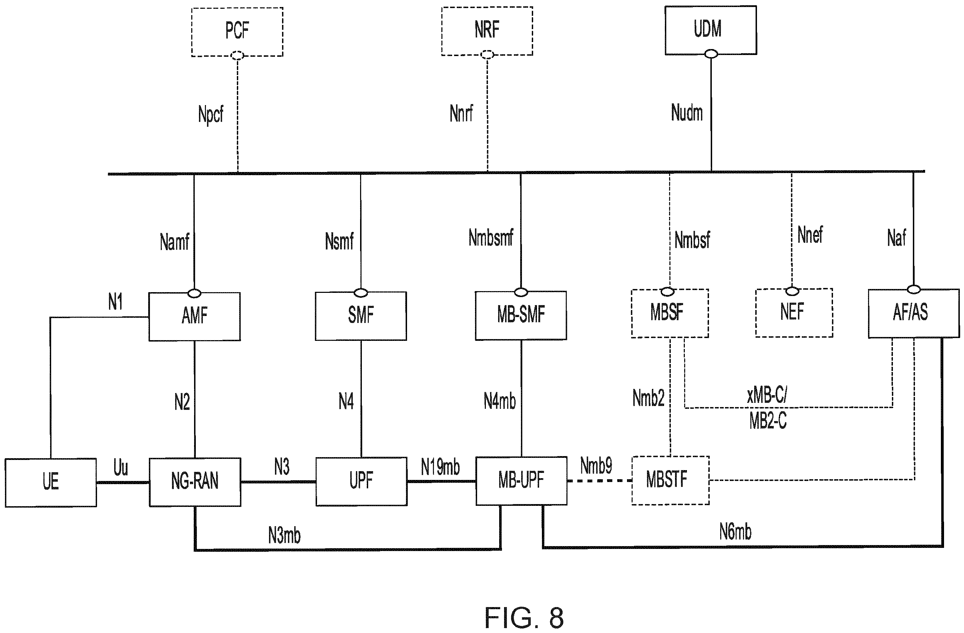

FIG. 8 illustrates an example of a 5G network and system architecture according to certain example embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 8 may be similar to NE 710 and UE 720, respectively. The user plane function (UPF) may provide services such as intra-RAT and inter-RAT mobility, routing and forwarding of data packets, inspection of packets, user plane quality of service (QoS) processing, buffering of downlink packets, and/or triggering of downlink data notifications. The application function (AF) may primarily interface with the core network to facilitate application usage of traffic routing and interact with the policy framework.

According to certain example embodiments, processors 711 and 721, and memories 712 and 722, may be included in or may form a part of processing circuitry or control circuitry. In addition, in some example embodiments, transceivers 713 and 723 may be included in or may form a part of transceiving circuitry.

In some example embodiments, an apparatus (e.g., NE 710 and/or UE 720) may include means for performing a method, a process, or any of the variants discussed herein. Examples of the means may include one or more processors, memory, controllers, transmitters, receivers, and/or computer program code for causing the performance of the operations.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art may readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

Partial Glossary

| | |
|---|---|
| 3GPP | 3rd Generation Partnership Project |
| 5G | 5th Generation |
| 5GC | 5th Generation Core |
| 6G | 6th Generation |
| AF | Application Function |
| ASIC | Application Specific Integrated Circuit |
| CBSD | Citizens Broadband Radio Service Device |
| CP | Carrier Phase |
| CPU | Central Processing Unit |
| CU | Centralized Unit |
| DL | Downlink |
| DU | Distributed Unit |
| eMBB | Enhanced Mobile Broadband |
| eNB | Evolved Node B |
| gNB | Next Generation Node B |
| GNSS | Global Navigation Satellite Systems |
| GPS | Global Positioning System |
| HDD | Hard Disk Drive |
| IoT | Internet of Things |
| LMF | Location Management Function |
| LO | Local Oscillator |
| LPHAP | Low-Power High-Accuracy Positioning |
| LPP | Long-Term Evolution Positioning Protocol |
| LTE | Long-Term Evolution |
| LTE-A | Long-Term Evolution Advanced |
| MEMS | Micro Electrical Mechanical System |
| MIMO | Multiple Input Multiple Output |
| mMTC | Massive Machine Type Communication |
| NE | Network Entity |
| NG | Next Generation |
| NG-eNB | Next Generation Evolved Node B |
| NG-RAN | Next Generation Radio Access Network |
| NR | New Radio |
| NRPPa | New Radio Positioning Protocol A |
| PDA | Personal Digital Assistance |
| PDSCH | Physical Downlink Shared Channel |
| PFL | Positioning Frequency Layer |
| PRS | Positioning Reference Signal |
| PRU | Positioning Reference Unit |
| PTRS | Phase Tracking Reference Signal |
| PUSCH | Physical Uplink Shared Channel |
| QoS | Quality of Service |
| RAM | Random Access Memory |
| RAN | Radio Access Network |
| RAT | Radio Access Technology |
| RF | Radio Frequency |
| ROM | Read-Only Memory |
| RTT | Round Trip Time |

Rx          Reception/Receive
SL          Sidelink
SRS         Sounding Reference Signal
TRP         Transmission Reception Point
Tx          Transmission/Transmit
UE          User Equipment
UMTS        Universal Mobile Telecommunications System
UPF         User Plane Function
URLLC       Ultra-Reliable and Low-Latency Communication
UTRAN       Universal Mobile Telecommunications System Terrestrial Radio Access Network

**Claims**

1. An apparatus comprising:

    at least one processor; and
    at least one memory storing instructions that, when executed by the at least one processor, cause the apparatus at least to:

        determine a local oscillator in the apparatus that is used to perform at least one downlink positioning reference signal (PRS) measurement and at least one uplink sounding reference signal (SRS) transmission; and
        transmit local oscillator information comprising at least one identifier associated with the determined local oscillator to a first network entity.

2. The apparatus of claim 1, wherein the at least one memory and the instructions, when executed by the at least one processor, further cause the apparatus at least to:
receive a request from the first network entity to use a same local oscillator for both the downlink PRS measurements and the uplink SRS transmissions.

3. The apparatus of claim 1 or 2, wherein the request comprises one or more of at least an identifier of the same local oscillator (LO ID), at least one downlink PRS measurement, at least one positioning reference signal resource identifier, or at least one sounding reference signal resource identifier.

4. The apparatus of any of claims 1-3, wherein the at least one memory and the instructions, when executed by the at least one processor, further cause the apparatus at least to:
when the apparatus does not use the same local oscillator for both the downlink PRS measurements and the uplink SRS transmissions, report to the first network entity different identifiers of corresponding different local oscillators, wherein one identifier is configured for the downlink PRS measurements and another identifier is configured for the uplink SRS transmissions, respectively.

5. The apparatus of any of claims 1-4, wherein the at least one memory and the instructions, when executed by the at least one processor, further cause the apparatus at least to:

    receive the at least one downlink positioning reference signal (PRS) from a second network entity; and
    transmit a report comprising the downlink carrier phase measurement to the first network entity.

6. The apparatus of any of claims 1-5, wherein:

    the apparatus comprises a user equipment;
    the first network entity comprises a location management function; and
    the second network entity comprises a radio network node or an anchor user equipment.

7. The apparatus of claim 6, wherein the at least one memory and the instructions, when executed by the at least one processor, further cause the apparatus at least to:
wherein if the second network entity is an anchor user equipment, communicate at least one of a sidelink positioning reference signal or the sounding reference signal via a sidelink interface between the anchor user equipment and the user equipment.

8. The apparatus of any of claims 1-7, wherein the at least one memory and the instructions, when executed by the at least one processor, further cause the apparatus at least to:
determine a local oscillator partially based on an antenna or antenna panel and radio frequency chain used for the SRS transmission.

9. The apparatus of any of claims 1-8, wherein the at least one memory and the instructions, when executed by the at least one processor, further cause the apparatus at least to:
transmit local oscillator information whether the same oscillator was used for downlink measurements and uplink transmissions.

10. An apparatus comprising:

   at least one processor; and
   at least one memory storing instructions that, when executed by the at least one processor, cause the apparatus at least to:

      determine a local oscillator in the apparatus that is used to perform at least one downlink positioning reference signal (PRS) transmission and at least one uplink sounding reference signal (SRS) measurement; and
      transmit local oscillator information comprising at least one identifier associated with the determined local oscillator to a first network entity.

11. An apparatus comprising:

   at least one processor; and
   at least one memory storing instructions that, when executed by the at least one processor, cause the apparatus at least to:
   receive from a user equipment and a network node, respectively:

      a first local oscillator information comprising at least one first identifier associated with a first determined local oscillator in the user equipment, and
      a second local oscillator information comprising at least one second identifier associated with a second determined local oscillator in the network node; and
      based upon at least the received first local oscillator information and the second local oscillator information, determine a round trip time for the user equipment.

12. The apparatus of claim 11, wherein the at least one memory and the instructions, when executed by the at least one processor, further cause the apparatus at least to:
transmit a request to use the same local oscillator for both downlink measurements and uplink transmissions.

13. The apparatus of claim 11 or 12, wherein the at least one memory and the instructions, when executed by the at least one processor, further cause the apparatus at least to:

   transmit a first request to the user equipment to use a same first local oscillator for both downlink positioning reference signal (PRS) measurements and at least one sounding reference signal (SRS) transmissions to the network node; and
   transmit a second request to the network node to use a same second local oscillator for both downlink PRS transmissions to the user equipment and uplink SRS measurements of the user equipment.

14. The apparatus of claim 13, wherein the round trip time for the user equipment is based at least upon:

   the user equipment using the same first local oscillator for both the downlink PRS measurements and the uplink SRS transmissions, and
   the network node using a same second local oscillator for both downlink PRS transmissions to the user equipment and uplink SRS measurements of the user equipment.

15. The apparatus of claim 13, wherein the first local oscillator information indicates at least one of:

the user equipment is using the same first local oscillator for both the downlink PRS measurements and the uplink SRS transmissions, or
the user equipment is not using the same first local oscillator for both the downlink PRS measurements and the uplink SRS transmissions.

FIG. 1

FIG. 2

FIG. 3

```
401 ─┐  ┌─────────────────────────┐
     └──│ Initiate bi-directional  │
        │ carrier phase positioning│
        └─────────────────────────┘
                    │
                    ▼
402 ─┐  ┌─────────────────────────┐
     └──│ Receive request to use   │
        │        same LO           │
        └─────────────────────────┘
                    │
                    ▼
403 ─┐  ┌─────────────────────────┐
     └──│      Receive DL PRS      │
        └─────────────────────────┘
                    │
                    ▼
404 ─┐  ┌─────────────────────────┐
     └──│ Determine LO for DL      │
        │  PRS measurements        │
        └─────────────────────────┘
                    │
                    ▼
405 ─┐  ┌─────────────────────────┐
     └──│ Transmit SRS positioning │
        └─────────────────────────┘
                    │
                    ▼
406 ─┐  ┌─────────────────────────┐
     └──│ Determine LO for SRS     │
        │      transmission        │
        └─────────────────────────┘
                    │
                    ▼
407 ─┐  ┌─────────────────────────┐
     └──│ Report DL carrier phase  │
        │      measurement         │
        └─────────────────────────┘
                    │
                    ▼
408 ─┐  ┌─────────────────────────┐
     └──│ Report LO information    │
        │      with LO ID          │
        └─────────────────────────┘
```

FIG. 4

501 — Initiate Bi-directional carrier phase positioning

502 — Receive request to use same LO

503 — Transmit DL PRS

504 — Determine LO for DL PRS transmission

505 — Receive SRS positioning

506 — Determine LO for SRS measurement

507 — Report UL carrier phase measurement

508 — Report LO with LO ID

FIG. 5

601 — Initiate bi-directional carrier phase positioning

↓

602 — Transmit request to use same LO

↓

603 — Receive report of DL carrier phase measurements

↓

604 — Receive report of UL carrier phase measruements

↓

605 — Receive report of LO with LO ID

↓

606 — Receive LO information with LO ID

↓

607 — Determine RTT measurements if same LO used

↓

608 — Take additional action if different LO used

# FIG. 6

714 710

Network Entity

711 Processor

712 Memory

713 Transceiver

716 Local Oscillator

724 720

User Equipment

721 Processor

722 Memory

723 Transceiver

726 Local Oscillator

# FIG. 7

FIG. 8

Europäisches
Patentamt

European
Patent Office

Office européen
des brevets

# EUROPEAN SEARCH REPORT

**Application Number**

EP 23 21 2969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/306979 A1 (CHOI CHANG-SIK [KR] ET AL) 30 September 2021 (2021-09-30)<br>* paragraph [0020] - paragraph [0036] *<br>* paragraph [0040] - paragraph [0054] *<br>* paragraph [0060] - paragraph [0086] *<br>* figures 1-10 *<br>* abstract * | 1-15 | INV.<br>G01S5/00<br>G01S13/84 |
| X | US 2021/373148 A1 (CHEN LEI [CN] ET AL) 2 December 2021 (2021-12-02)<br>* paragraph [0080] - paragraph [0096] *<br>* paragraph [0129] - paragraph [0187] *<br>* figures 1-11 * | 1,4,8,9<br><br>2,3,5-7,<br>10-15 | |
| X<br><br>A | WO 2022/133951 A1 (HUAWEI TECH CO LTD [CN]) 30 June 2022 (2022-06-30)<br>* paragraph [0002] - paragraph [0004] *<br>* paragraph [0029] - paragraph [0078] *<br>* paragraph [0342] - paragraph [0363] *<br>* figure 27 *<br>* abstract * | 1,10,11<br><br>2-9,<br>12-15 | TECHNICAL FIELDS SEARCHED (IPC) |
| A | CN 108 072 870 A (SOUTHWEST INSTITUTE OF ELECTRONIC TECH CETC NO 10 RESEARCH INSTITUTE) 25 May 2018 (2018-05-25)<br>* the whole document * | 1-15 | G01S |

The present search report has been drawn up for all claims

| Place of search | Date of completion of the search | Examiner |
|---|---|---|
| Munich | 15 May 2024 | Galmiche, Aurélien |

EPO FORM 1503 03.82 (P04C01)

## ANNEX TO THE EUROPEAN SEARCH REPORT
## ON EUROPEAN PATENT APPLICATION NO.

EP 23 21 2969

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2024

| Patent document cited in search report | | Publication date | Patent family member(s) | | Publication date |
|---|---|---|---|---|---|
| US 2021306979 | A1 | 30-09-2021 | BR 112022018368 | A2 | 08-11-2022 |
| | | | CN 115335723 | A | 11-11-2022 |
| | | | EP 4127769 | A1 | 08-02-2023 |
| | | | JP 2023519154 | A | 10-05-2023 |
| | | | KR 20220159376 | A | 02-12-2022 |
| | | | TW 202145763 | A | 01-12-2021 |
| | | | US 2021306979 | A1 | 30-09-2021 |
| | | | WO 2021194866 | A1 | 30-09-2021 |
| US 2021373148 | A1 | 02-12-2021 | BR 112021016052 | A2 | 05-10-2021 |
| | | | CN 111586832 | A | 25-08-2020 |
| | | | CN 114567928 | A | 31-05-2022 |
| | | | EP 3923643 | A1 | 15-12-2021 |
| | | | JP 7242880 | B2 | 20-03-2023 |
| | | | JP 2022520265 | A | 29-03-2022 |
| | | | US 2021373148 | A1 | 02-12-2021 |
| | | | WO 2020164512 | A1 | 20-08-2020 |
| WO 2022133951 | A1 | 30-06-2022 | CN 116548002 | A | 04-08-2023 |
| | | | EP 4248696 | A1 | 27-09-2023 |
| | | | JP 2024504011 | A | 30-01-2024 |
| | | | US 2023309144 | A1 | 28-09-2023 |
| | | | WO 2022133951 | A1 | 30-06-2022 |
| CN 108072870 | A | 25-05-2018 | NONE | | |

EPO FORM P0459

For more details about this annex : see Official Journal of the European Patent Office, No. 12/82